# EUROPEAN PATENT SPECIFICATION

(11) **EP 3 031 594 B1**
(45) Date of publication and mention of the grant of the patent: **09.08.2017**
(21) Application number: 14834370.0
(22) Date of filing: 19.06.2014
(51) Int. Cl.: B29C 45/76, B29L 31/34, B29C 45/14

(54) **INJECTION CONTROL METHOD, AND INJECTION CONTROL DEVICE**
EINSPRITZSTEUERUNGSVERFAHREN UND EINSPRITZSTEUERUNGSVORRICHTUNG
PROCÉDÉ DE RÉGULATION D'INJECTION ET DISPOSITIF DE RÉGULATION D'INJECTION

(30) Priority: 09.08.2013 JP 2013166697; 10.12.2013 JP 2013255063
(43) Date of publication of application: 15.06.2016
(73) Proprietor: Nissan Motor Co., Ltd., Kanagawa 220-8623 (JP)
(72) Inventor: OCHIAI, Kenichi, Atsugi-shi Kanagawa 243-0123 (JP)
(74) Representative: Hoefer & Partner Patentanwälte mbB
(86) International application number: PCT/JP2014/066224
(87) International publication number: WO 2015/019721

(56) References cited:
- CH-A5- 667 843
- JP-A- H04 279 310
- JP-A- H09 123 214
- JP-A- S56 144 939
- JP-A- S62 128 725
- US-A- 5 993 704
- US-A1- 2010 252 944

## Description

### TECHNICAL FIELD

The present invention relates to an injection control method and an injection control system.

### BACKGROUND

Conventionally, a technique for sealing to cover a circuit board entirely is available, in which thermoplastic resin is injection molded to a circuit board on which electronic components are mounted. The technique is used, for example, in fabricating a thin secondary battery.

When the thermoplastic resin is in a low viscosity, turbulence easily occurs when injected into the cavity of the mold to generate voids.

Therefore, in Patent Document 1, by detecting an injection pressure of the thermoplastic resin, the flow rate is controlled so as not generates the turbulence.

### PRIOR ART REFERENCE

### PATENT DOCUMENT

Patent Document 1: JP 2004-351777 A

US 2010/0252944 A1 discloses a method for monitoring, documenting, and/or controlling an injection molding machine having an injection molding tool into which a melt is introduced, wherein a viscosity of the melt in the injection molding tool is determined directly.

JP S62 128725 A discloses an improved injection molding method in which the time at which the injection of synthetic resin is in the condition of short shot is detected by a pressure sensor. Based on this, the time at which pressure is switched from an injection pressure to a pressure keeping state is controlled.

### SUMMARY OF THE INVENTION

### PROBLEM TO BE SOLVED BY THE INVENTION

However, even if the flow rate of the thermoplastic resin is controlled, the viscosity of the thermoplastic resin varies in practice by a variety of factors such as material lot and resin temperature, it is difficult to maintain an ideal flow rate. Therefore, the total injection amount into the mold of the thermoplastic resin is not stable, problems such as short shot or overflow occurs, there is a problem.

The present invention has been made in view of the above circumstances, and an object thereof is to provide an injection control method for stabilizing the total injection amount to the mold of the injection material such as a thermoplastic resin, and an injection control system therefor.

### MEACHANISM FOR SOLVING THE PROBLEM

According the present invention for achieving the above object, there is provided an injection control method for controlling an injection mechanism for injecting an injection material into a mold cavity, the method including a detection step for detecting that the injection material reaches a predetermined position in the cavity separated or away from an injection position, and a determination step for determining an injection termination time based on a time period from the injection start of the injection material until the detection in the detection step by using a relationship expression representing the relationship between the time period from the injection start of the injection material to the detection in the detection step and the time until a predetermined amount of the injection material is injected into the cavity.

Further, according to the present invention for achieving the above object, there is provided an injection control system, comprising an injection unit that injects an injection material into a mold cavity, a detection unit provided in a position in the cavity away from the position in which the injection material is injected, and a determination unit which determines an injection termination time based on a time period from the injection start of the injection material until the detection by the detection unit by using a relationship expression representing the relationship between the time period from the injection start of the injection material to detection in the detection step and the time until the cavity is filled with the injection material.

### EFFECT OF THE INVENTION

According to the present invention, based on a time period to reach a predetermined position away from the injection position, the injection termination time is determined. Thus, even in a case in which the injection condition of injection material (such as viscosity) is different from the original schedule due to various factors such as material lot, a resin temperature and the like, the total amount of injection material finally injected into the mold will be constant. Therefore, without adjusting the injection pressure, resin temperature, mold temperature, and the like individually, by a simple method of simply varying the injection termination time, it is possible to stabilize the total injection amount of the injection material. As a result, without generating problems such as short shot or overflow, a high yield is obtained.

The objects, configurations, and effects other than those describe above will become apparent from the following description of embodiments.

### BRIEF DESCRIPTION OF THE DRAWINGS

FIG. 1 is a schematic block diagram of an injection control system;
FIG. 2 is a schematic view showing a battery cell and a molded product manufactured;
FIG. 3 is a schematic external view of a mold apparatus;
FIG. 4 is a bottom view of an upper mold constituting the mold apparatus;
FIG. 5 is a view showing a state in which the injection material is injected in an upper die;
FIG. 6 is a view showing a section along the line VI-VI in FIG. 3;
FIG. 7 is a view showing a section along the line VII-VII in FIG. 3;
FIG. 8 is a graph showing the relationship between the optimum injection termination time to produce a defect-free molded product and the time period until the injection material injected into the mold apparatus reaches a sensor;
FIG. 9 is a flowchart showing the procedure of manufacturing process of the molded product;
FIG. 10 is a graph showing the relationship between the injection time of the injection material and an actual injection quantity;
FIG. 11 is a graph a relationship between a temperature measured by an infrared temperature sensor and a voltage value of the infrared temperature sensor output at that time.
FIG. 12 a diagram showing a configuration example in which a discharge device having a plurality of discharge pumps and a plurality of mold apparatuses with a single sensor only are connected (2 pumps 1 sensor) ;
FIG. 13 is a diagram showing a configuration example in which a discharge device having a plurality of discharge pumps and a plurality of mold apparatuses with two sensors are connected (2 pumps 2 sensors);
FIG. 14 is a diagram showing a configuration example in which a discharge device having a single discharge pump and a plurality of mold apparatuses with only a single sensor are connected (1 pump 1 sensor); and
FIG. 15 is a graph of a linear function that indicates the relationship between the optimum injection termination time to produce a defect-free molded product and the time until the injection material injected into the mold apparatus reaches the sensor.

### EMBODIMENTS FOR IMPLEMENTING THE INVENTION

Below, a description will be given of an embodiment according to the present invention with reference to the accompanying drawings. In the description of the drawings, the same element is denoted by the same reference numeral, and overlapping description thereof is omitted. Furthermore, dimensional ratios are exaggerated in the drawings for convenience of explanation, and may differ from the actual ratio.

### <Injection control system 1>

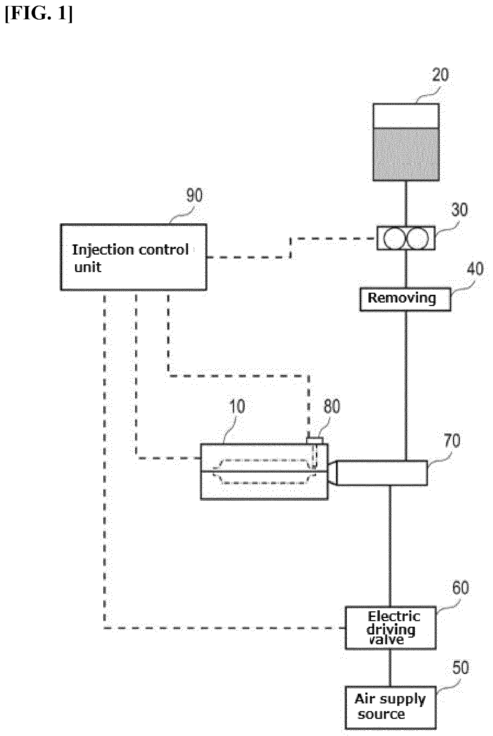

FIG. 1 is a schematic diagram of the injection control system 1 pertaining to the present embodiment.

The Injection control system 1 is intended to be a system for producing a molded article or product by injection molding. As a shaped product, for example, a reinforcing member is produced for reinforcing a subject object. In this embodiment, the subject object is a battery cell which is reinforced.

As shown in FIG. 1, the injection control system 1 is provided with a mold apparatus 10, an injection material supply source 20, a pumping device 30, a removing device 40, an air supply source 50, an electric driving valve 60, a discharge device 70, a sensor 80, and an injection control unit 90. In the injection control system 1, by injecting hot molten material as injection material into a mold apparatus 10 with a battery cell 100 disposed within the mold apparatus 10, a molded product is manufactured in the periphery of the battery cell 100. The descriptions of the battery cell, molded product, and the like will be made below in detail. First, a description is given of the outline of each component of the injection control system 1.

The mold apparatus 10 includes an upper mold and a lower mold, and, by combining the upper and lower molds, a battery cell 100 is accommodated therein. The periphery of the cell 100 is formed by a cavity in which the injection material will be injected. A molded product will be made around the cell according to the shape of the cavity. For more information about the mold apparatus 10, a detailed description will be given below.

The injection material supply source 20 represents a source of injection material injected into the mold apparatus 10. For example, the injection material source 20 is capable of holding a tank for injecting material.

The pumping device 30 is connected to the injection material supply source 20, and the injection material contained in the injection material supply source 20 is pumped into the removing device 40. The pumping device 30 can adjust the amount of injection material to be pumped into the removal device 40 (also referred to as "supply amount"). The pumping device 30 can also stop pumping *(i.e.,* to reduce the supply amount to *"0").* Note that, as the pumping device, a hydraulic drive pump *(e.g.* gear pump) may be used. However, the present invention is not limited to this. An air-driven pump and the like may be used.

The removing device 40 is provided between the pumping device 30 and the discharge device 70, and is intended to filter for removing foreign substances contained in the injection material pumped from the pumping device 30. The types of filters are preferred to use a stainless steel leaf disc filter. As the filter element, preference is given to use a fiber type, powder type or complex type of these.

The air supply source 50 is a supply source for supplying air to the discharge unit 70. For example, the air supply source 50 may be an air compressor which outputs the compressed air by rotation of a motor.

The electric driving valve 60, by adjusting the opening and closing amount of the valve (valve), controls the pressure of air supplied to the discharge device 70 from the air supply source 50. Note that the electric driving valve 60 makes use of an electromagnet (solenoid valve) which is selectively opened and closed by moving an iron piece called plunger using a magnetic force of the electromagnet. However, the present invention is not limited thereto. An electric valve which is driven by a motor may be used, instead.

The discharge device 70 discharges the injection material supplied from the injection material supply source 20 into the cavity of the mold apparatus 10 while adjusting the supply amount by an air pressure supplied from the air supply source 50. The larger the opening and closing degree of the electric driving valve 60, the pressure of air supplied from the air supply source 50 becomes larger such that the discharge amount per unit time can be increased. Conversely, when the opening and closing degree of the electric driving valve 60 is reduced, the discharge amount of the discharge device 70 per unit time will be decreased. Further, when the opening and closing degree of the electric driving valve 60 is set constant, it is possible to render the discharge amount per unit time of the discharge device 70 constant. When the electric driving valve 60 is closed, the air pressure supplied from the air supply source 50 disappears, so that the injection of the discharge device 70 into the cavity 17 is stopped.

The sensor 80 is attached to the mold apparatus 10 to detect a flow of the injection material. The sensing result of the sensor 80 is transmitted to the injection control unit 90 successively. A description of the sensor 80 will be made in detail below.

The injection control device 90 is connected to the mold apparatus 10, the pumping device 30, the electric driving valve 60, and the sensor 80 to control each component. For example, the injection control unit 90 controls opening and closing of the mold of the mold apparatus 10, or adjusts the supply amount of the injection material from the pumping device 30 to the removing device 40, and adjusts the opening and closing degree of the electric driving valve 60. Further, the injection control unit 90 measures the injection time of the injection material, and based on a detection result of the sensor 80,and predicts (determines) the optimum time to end the injection of the injection material (hereinafter, also referred to as "injection termination time").

The injection control device 90 is realized by a general computer in which a CPU (not shown) reads out from a program installed in a storage (not shown) into a memory (not shown) for execution. For example, as the injection control unit 90 , a desktop type PC (Personal Computer) may be used. Alternatively, a tablet terminal, smart phone, cellular phone, portable terminal, and the like may be used. More detailed control by the injection control device 90 will be described below.

Below, a more specific description of the configuration described above will be made below.

### (Battery cell 100 and molded product)

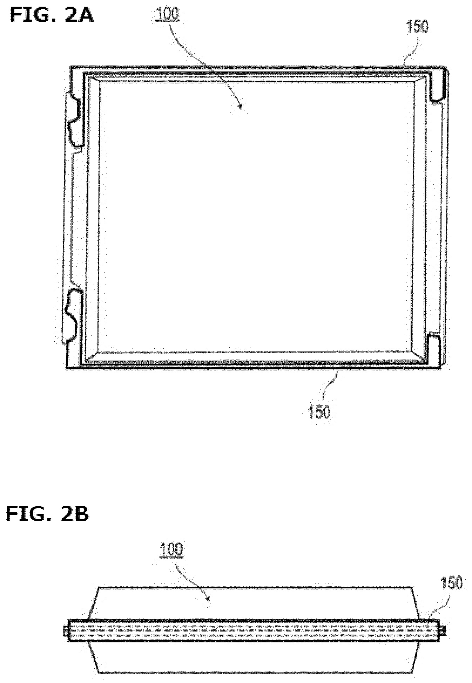

FIG. 2 is a schematic view of a battery cell and a molded product to be manufactured. FIG. 2A is a plan view of the battery cell, and Fig. 2B is a side view of the battery cell.

The battery cell 100 is a flat-shaped secondary battery, and includes a battery cell element composed of a positive electrode, a separator, a negative electrode stacked on one another with an exterior casing enclosed. The exterior casing is composed of two laminate sheets which sandwich the battery element on the both sides of the stacking direction and seals the battery element by end edges being welded to each other. The outer circumference of the battery cell 100 is formed by the laminate sheets which are welded. Thus, it is soft and easy to be deformed during handling or stacking the battery cells 100.

Therefore, in the present embodiment, in order to reinforce the outer circumference (end side) of the battery cell 100, the injection control system 1 forms the reinforcing member 150 shown in FIG. 2. The reinforcing member 150 is fabricated so as to cover the thin outer circumference of the rectangular battery cell 100.

### (Mold apparatus 10)

A description is given of a mold apparatus 10.

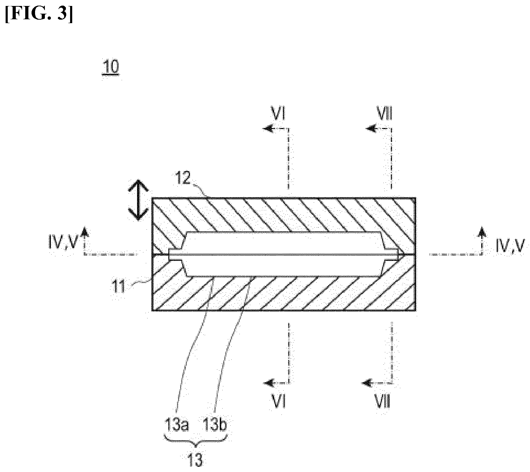

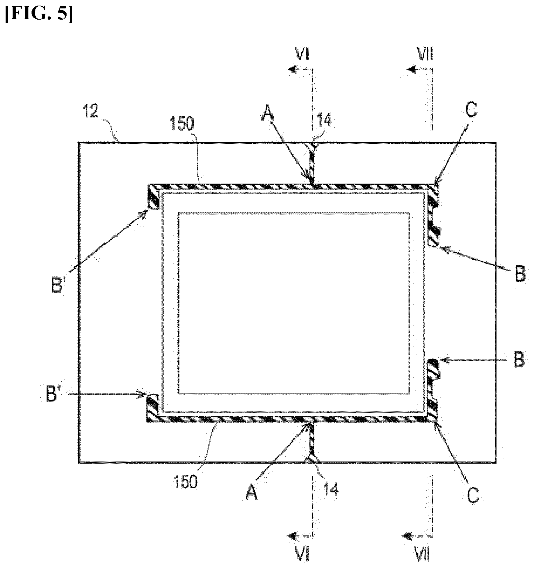

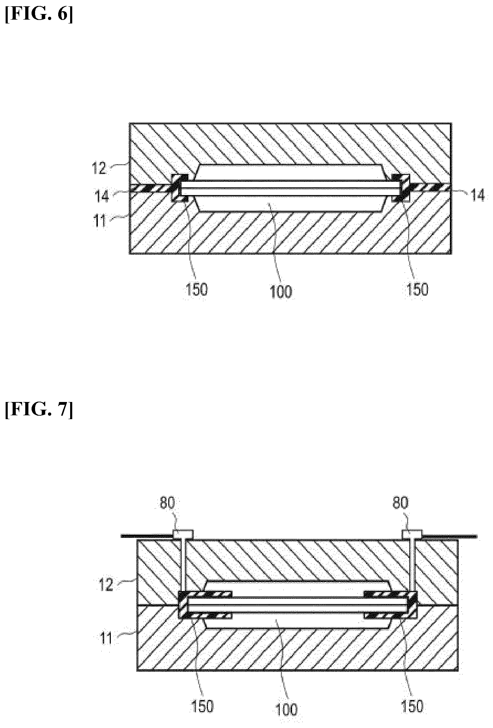

FIG. 3 is a schematic external view of a mold apparatus. FIG. 5 is a view showing a state in which the injection material is injected in an upper die. In FIGS. 3 to 5, the battery cell disposed within the die or mold is not illustrated. FIG. 6 is a view showing a section along the line VI-VI in FIG. 3, and FIG. 7 is a view showing a section along the line VII-VII in FIG. 3, respectively.

The mold apparatus 10 is, for example, as shown in FIG.3, provided with a lower die 11 is a stationary, fixed die, and a movable upper die 12, which moves up and down by a driving mechanism (not shown). The lower die 11 and upper die 12, respectively, are formed with an accommodating portion 13a, 13b which is capable of housing the battery cell 100. When the upper die 12 approaches the lower die 11 to be mated each other, a housing portion 13 is formed by the accommodating portion 13a, 13b.

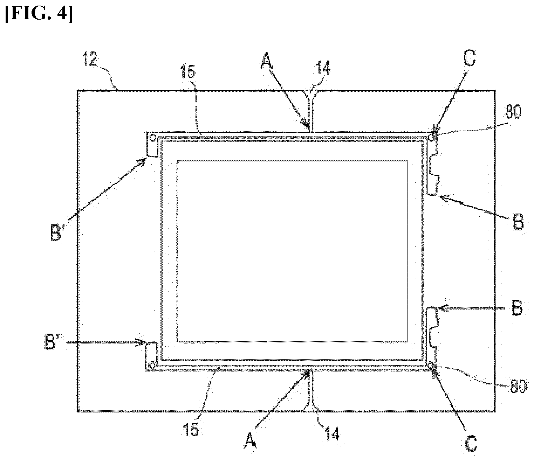

Though not specifically illustrated in FIG. 3, the lower die 11 and the upper die 12 are provided with an injection inlet and a cavity. As shown in FIG. 4, when the upper die 12 is viewed from the bottom, an injection inlet 14 and a cavity 15 are formed. In the lower die 11, a least a cavity 15 is provided in a position corresponding to the injection inlet 14. The cavity 15 is formed to conform to the shape of the desired reinforcement member 150. When the injection material is injected from the injection inlet 14, the injection material passes through position A, and proceeds divided into two directions towards flow ends B, B'. The position A is a boundary between the injection inlet 14 and the cavity 15, and, as viewed from the injection inlet 14, represents a first position in which the injection material remains as a reinforcing member 150. The position A is referred to as an injection position A as well in the following.

The flow ends B, B ' represents a portion in which the flow of injection material is stopped, that is, the end of the portion in which injection material is filled. The injection material passes through a predetermined position C to reach the flow ends B, B'. Thus, once the injection material has been filled into the cavity 15, the reinforcing member 150 shaped as shown in FIGS. 5 to 7 is obtained. Therefore, the reinforcing member 150, as shown in FIG. 2, is formed to cover end portions of the cell 100.

Note that the injection position A is preferably located at the gravity center of the injection material (reinforcing member 150) when the cavity 15 is assumed to have been filled by the injection material. By locating the injection position A and injection inlet port 14 in such a position, when there are more than one flow end B, B' at which the flow of the injection material stops, the time to reach respective flow end B, B' can be roughly equal. Therefore, it is possible to inject injection material into the entire cavity 15 without a bias. As a result, such a case will be excluded in which injection material is continuously injected toward one of the flow ends B, B' despite the injection material already reaching the other flow ends B, B'. Thus, the load on the mold apparatus 10 will be reduced without being forcibly injected with injection material.

### (Sensor 80)

Now, a description is give of a sensor 80. As shown in FIGS. 4 and 7, the sensor 80 is mounted in the upper die 12 so as to be exposed toward the cavity 15, in other words, to be in contact with the injection material at the time of injection. time of the injection material, and is provided in the upper mold 12. The sensors 80 are provided for the number of independent cavities 15. The sensor 80 senses that the injection material reaches the predetermined position C in the cavity 15, which is separated or away from the injection position A.

It is preferable for the sensor 80 to be located in the predetermined position C, which is, as shown in FIG.4, somewhere between the injection position A and the flow end B. Note that, in the present embodiment, the position between the injection inlet A and the flow end B is defined as corresponding to a range between 10% injection amount and 90% injection amount of the total volume of the injection extending between the position A to the flow end B. , However, this range is not limitative, but may be rather any arbitrary range. However, it should be noted that the sensor 80 should not mounted in the flow inlet position A or in the flow end B.

When the sensor 80 is provided in the vicinity of the flow end B so as to be distanced from the injection position A, at the time at which the injection material reaches the position of the sensor 80, the temperature is lowered. At this time, since the injection control unit 90 cannot accurately grasp time at which the injection material reaches the sensor 80 , based on the detection result of the sensor 80. Thus, even when predicting the optimum time at which the injection of the injection material should be terminated by the injection control unit 90, the prediction error is large. In addition, even when detecting the injection material in the vicinity of the flow end B, the remaining space up to the flow end B is small so that there may be no room for controlling the injection amount. In contrast, when the sensor 80 is provided in the vicinity of the injection position A, the time at which the injection material reaches the predetermined position C becomes extremely short. Thus, even when predicting the termination time of the injection of the injection material by the injection control unit 90 based on the detection result of such a sensor 80, the prediction error may be large. Therefore, as in the present embodiment, by providing the sensor 80 somewhere between the injection position A and the flow end B, it is possible to predict the optimum time to end injection of injection material accurately.

Alternatively, it is preferable to provide the sensor 80 in a position of an ejector pin for releasing the molded product from the mold apparatus 10. Thus, without processing the mold apparatus 10 (for example, upper die 12) for installation of a new sensor 80, the sensor may be installed at low cost by simply inserting the sensor in a hole for the existing ejector pin.

Note that the sensor 80 may be configured, for example, by at least any one of a temperature sensor, a pressure sensor, and a fiber sensor. If the sensor 80 is configured by the temperature sensor, the sensor 80 transmits the detected temperature of the injection material to the injection control unit 90 as a sensor signal. Further, if the sensor 80 is formed by the pressure sensor, the sensor 80 transmits the detected pressure value to the injection control unit 90 as sensor value. Moreover, when the sensor 80 is structured by a fiber sensor, the sensor 80 transmits the detected light amount to the injection control unit 90 as sensor value. By configuring the sensor 80 as described above, it is possible to inform the injection control unit 90 reliably of the state in the vicinity of the predetermined position C in the cavity 15.

### (Injection control unit 90)

The injection control unit 90 controls the injection amount of the injection material into the cavity 15 of the mold apparatus 10. For example, the injection control unit 90 includes a timer for measuring the elapsed time period from the injection start of the injection material until the time at which the injection material injected from the injection position A reaches the predetermined position C based on the sensor value from the sensor 80.Further, based on the measured elapsed time period, the injection control device 90 determines the injection termination time at which the necessary and sufficient injection amount of injection material can be injected to manufacture the molded product (for example, reinforcing member 150). Here, the necessary and sufficient injection amount refers to the total injection amount into the cavity 15 to the extent that problems such as short shot or overflow as described above would not occur.

Note that, through experiments in advance, the relationship between the reaching time X at which the injection material reaches the sensor 80 and the injection termination time Y at which a predetermined amount (total injection amount which is necessary and sufficient for manufacturing a molded product) of the injection material is obtained as represented by the equation, Y=F(X). Specifically, in the course of repeated trial of the molded products, for each prototype, the arrival time X is measured and the optimal injection termination time Y of the molded product without defects is identified by observing the status of the prototype. The plurality of sets of data obtained by the trial (arrival time X, the injection termination time Y) is plotted as points on a two dimensional plane, and a curve (the relationship " Y = F (X) described above) that best fits the points plotted is obtained by the general method such as leastsquare method. In the present embodiment, the relational equation F is obtained as a quadratic function.

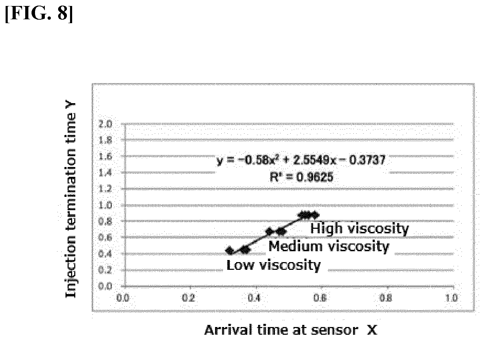

For example, as in the example shown in FIG. 8, by using injection materials of low-viscosity, medium viscosity, and high viscosity, and repeating the trial of the molded products, it is possible to obtain the relationship equation F described above. It should be noted that, in the case of injecting the injection material of low viscosity, the conditions should be satisfied, i.e., (A1) injection material: viscosity value is the lower limit of the material in the standard, (A2) resin temperature: setting temperature 200 °C + temperature variation upper limit 3 °C = 203 °C, (A3) mold temperature: mold product surface temperature 20 °C + variations 3 °C = 23 °C. In addition, in the case of injecting the injection material of high viscosity, the conditions should be satisfied, i.e., (B1) injection material: viscosity value is the upper limit of the material in the standard, (B2) resin temperature: setting temperature 200°C - temperature variation 3 °C =197 °C, (B3) mold temperature: mold product surface temperature 20 °C - variation 3 °C =17 °C. In the case of injecting the injection material of medium viscosity, it is assumed that the intermediate condition between the low viscosity and high viscosity is satisfied.

In FIG.8, a plurality of sets of data obtained is plotted (in a diamond shaped plot) when the trial was repeated with more injection conditions (arrival time X, injection termination time Y). In addition, when calculating the best fit curve to each point that has been plotted by the leastsquare method, the relationship equation F is obtained that is expressed by "Y = -0.58X ² + 2.5549X-0.3737 ". Incidentally, the coefficient of determination R² in this case is 0.9625, i.e., the value close to "1". Thus, the relationship F presents a good fit.

By methods such as described in the above examples, the relation formula F between the arrival time X and the injection termination time Y is obtained previously for storing in a storage unit (not shown) by the injection control unit 90.

### (Control by injection control unit 90)

Now, a description is give of control of the injection control system 1 according to the present embodiment.

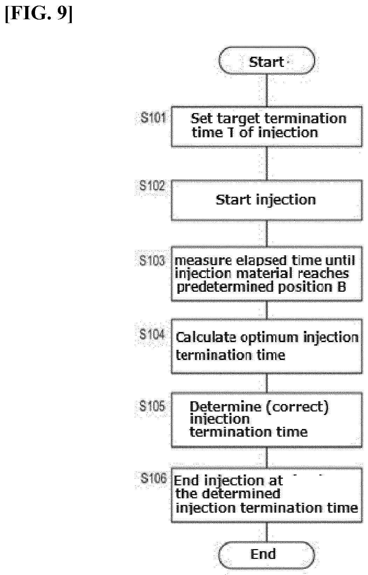

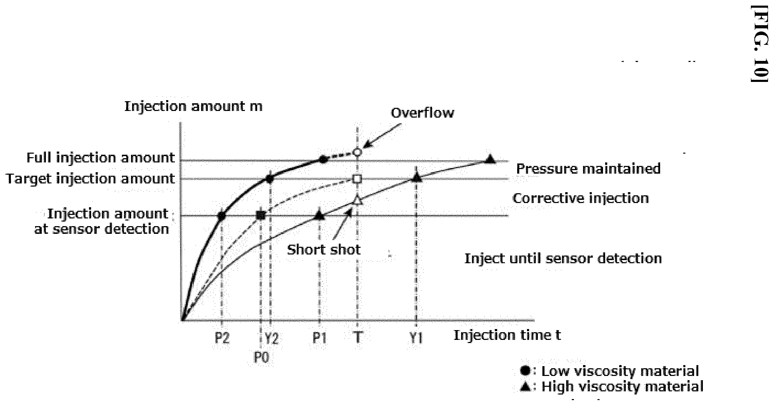

FIG. 9 is a flowchart showing the procedure of manufacturing process of a molded product, which is performed in the injection control unit. FIG. 10 is a graph showing the relationship between the injection time of injection material and an actual injection amount.

### (Step S101)

First, the injection control unit 90, prior to the production of molded product, sets an injection time from the start of injection of the injection material to the termination (hereinafter, referred to as "target termination time T") . The target termination time T may be calculated automatically by the injection control unit 90 based on the injection conditions (viscosity, temperature, etc.), or may be entered manually be a user.

### (Step S102)

The injection control unit starts the injection of the injection material to the cavity 15 of the mold apparatus 10. Specifically, the injection control unit 90 opens the electric driving valve 60 at predetermined opening and closing degree by sending an instruction signal.

When opening the electric driving valve 60, injection into the cavity 15 is started. However, with the opening and closing degree of the electric driving valve 60 holding constant, the discharge amount of the injection material per unit time from the discharge device 70 will be held constant. Nevertheless, due to characteristics of the injection material (such as viscosity) and using environment of the injection control system 1, the injection amount per unit time which is actually injected into the cavity 15 will vary. For example, as shown in FIG. 10, the injection amount to be actually injected into the cavity 15 is not necessarily proportional with respect to the injection time, and the injection amount per unit time (corresponds to the slope of the curve) changes depending on the viscosity of the injection material.

Therefore, when terminating injection at the target termination time T uniformly, i.e., regardless of the characteristics of the injection material, the total amount injected into the cavity 15 is not stable so that problems such as short shot or overflow occur. For example, a discussion is made assuming that the target termination time T is set under the prediction of injection as illustrated by broken line in the graph of FIG. 10. In reality, as shown by thin solid line in the graph of FIG. 10, the time P1 at which the sensor 80 has detected arrival of injection material can be delayed than the time P0 predicted in advance. This case shows that the injection material is highly viscous (high-viscosity material) than expected. Therefore, when terminating the injection to the original planned target termination time T, it is not possible to inject the injection material of the target injection amount; so that a short shot ("Δ" in FIG. 10) occurs. In addition, as shown by thick solid line in the graph of FIG. 10, in reality, a case may be present in which the time P2 at which the sensor 80 detects arrival of the injection material is earlier than the previously predicted set time P0. This case represents that the injection material is of lower viscosity (low viscosity material) than originally predicted. Thus, when terminating the injection as originally planned at the target termination time T, the injection material will be injected more than the target injection amount to attain an overflow state (see "○" in FIG. 10).

Therefore, the injection control unit 90 checks an actual injection conditions in the middle or intermediate stage of injection process to change (or correct) the injection termination time depending on the injection conditions.

### (Step S103)

More specifically, the injection control unit 90 first measures, from the start of injection of the injection material, the arrival time X at which the injection material reaches a predetermined position C (see FIG. 4) of the cavity 15. For example, simultaneously with the start of the injection material, the injection control device 90 operates the timer to run. At the same time, the injection control unit 90 keeps monitoring the sensor value transmitted from the sensor 16, and when the sensor value changes more than a predetermined value, detection is made that the injection material has reached the predetermined position C. The injection control unit 90, by referring to the value of the timer when detecting that the injection material has reached a predetermined position C, measures the arrival time X until the injection material reaches a predetermined position C from the injection start.

### (Step S104)

Subsequently, the injection control unit 90 reads the relational expression F which is stored in advance from the storage unit, an arrival time X which is measured in step S103 is substituted into the relationship expression F. Thus, the injection control unit 90, with respect to the current injection (shot) of the injection material, can obtain the optimum injection termination time Y for manufacturing a trouble-free molded product according to the actual injection situation.

### (Step S105)

Subsequently, the injection control unit 90 changes (corrects) the target termination time T set in step S101 to the injection termination time Y obtained in step S104. For example, as shown in thin solid line in FIG. 10, when the injection material is of higher viscosity (high viscosity material) than expected, the injection control unit 80 delays the injection termination time from T to Y1. Further, as shown in bold block line in FIG. 10, when the injection material is of lower viscosity (low viscosity material) than predicted, the injection control unit 90 advance the injection termination time from T to Y2.

### (Step S106)

Then, the injection control unit 90, without changing the discharge amount per unit time of the injection material by the discharge device 70, continues injection of the injection material, and upon reaching the injection termination time determined in step S105, performs a control to close the electric driving valve 60 to end the injection. Thus, regardless of the characteristics of the injection materials and the using environment of the injection control system 1, it is possible to inject the injection material into the cavity 15 at the necessary and sufficient injection amount (total injection amount) to manufacture a defect-free mold product.

With the termination of step S106, the injection control unit 90 ends the manufacturing process of the molded product.

In the manufacturing process of the above molded product, based on the time until the injection material until reaches a predetermined position C away from the injection position A, the injection end time will be determined. That is, after the injection of the injection material is initiated, by looking at the actual injection conditions, the total injection amount will be controlled by varying the injection termination time. Thus, even when the injection condition (such as viscosity)of the injection material is different from the original schedule due to various factors, such as the material lot and the resin temperature, the total injection amount of the injection material that is ultimately injected into the mold will be constant. Therefore, even without adjusting the injection pressure, the resin temperature, and the like, individually, by a simple method of simply varying the injection termination time, it is possible to stabilize the total injection amount of the injection material. As a result, the yield is higher without generating the problems such as short shot or overflow.

Incidentally, the processing steps in the flowchart described above are obtained by dividing in accordance with the main processing content in each step in order to facilitate understanding of the injection control unit 90. However, the present invention will not be limited depending on how each step is classified or designated. For example, the processing performed by the injection control unit 90 may be further divided into many processing steps. Alternatively, one processing step may execute further processing step.

### (Modifications)

The above-described embodiments are intended to illustrate the subject matter of the invention and are not intended to limit the present invention. Many alternatives, modifications, variations are apparent to those skilled in the art.

For example, in the above-described embodiment, the molded product produced by the injection control system 1 is a reinforcing member 150 of a battery cell 100. However, the present invention may not be limited thereto as long as moldable by a usual mold.

In the above-described embodiment, the thermoplastic resin is used as the injection material, and injected into the cavity 15 of the mold apparatus 10 to produce a molded article. However, the invention is not limited thereto. Rather, a thermosetting resin may be used as an injection material. The thermosetting resin is liquid at room temperature. When injected into the cavity 15 of a heated mold apparatus 10, the resin is solidified by melting. Even in the case of producing a molded article by using a thermosetting resin having such properties, the injection termination time may be controlled by the injection control method in the above embodiment. Thus, in the case of using a thermoplastic resin as the injection material, the same effect may be obtained.

In the above-described embodiment, the relation formula F representing the relationship between the arrival time X of the injection material to the sensor 80 and the injection termination time Y representing the injection termination time elapsed from the injection start to the injection termination is expressed in a quadratic function. However, the invention is not limited thereto. Depending on the requirements for accuracy, a first-order function, a three-order function, or higher-order function may be used instead.

In the above-described embodiment, an example is shown in which, as the sensor 80 , a temperature sensor, a pressure sensor, or a fiber sensor is used. It is also possible to use an infrared type temperature sensor. Here, the infrared temperature sensor refers to a sensor that measures the temperature by detecting the amount of infrared radiation. The infrared temperature sensor can inform to the injection control unit 90 of a temperature in the vicinity of the predetermined position C in the cavity 15 by outputting to the injection control unit 90 a voltage value corresponding to the measured temperature as a sensor value.

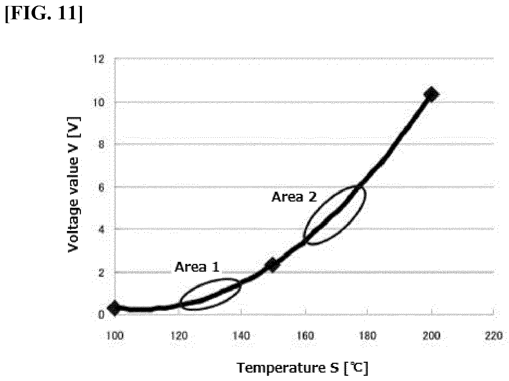

However, the voltage value outputted from the infrared sensor may not be an accurate value and is easily buried in noise depending on the measured temperature. FIG. 11 is a graph showing a correspondence relationship between the temperature S to be measured by the infrared temperature sensor and the voltage value V of infrared temperature sensor output at that time. As shown in the graph of FIG. 11, the measured temperature S is not directly proportional to the output voltage value V. Therefore, in the region of relatively small change amount of the voltage value V with respect to the temperature S (for example, in area 1 in the figure) and in the region of relatively large change amount of voltage value V with respect to the temperature S (for example, in area 2 in the figure), the dynamic ranges of outputtable voltage value V are different from each other. With this in mind, it is preferable for the infrared temperature sensor to be arranged in a position in which the temperature of the injection material can be measured, which in turn provides an area of wider dynamic range of the output voltage V (for example, in area 2 in the figure). For example, by providing the infrared temperature sensor in position C shown in FIG. 4, it is possible to measure the injection material at a temperature in the range of the area 2 shown in the figure. Thus, the voltage value V outputted from the infrared temperature sensor indicates a precise value that is not buried in noise. As a result, the injection control unit 90 will be able to detect reliably that the injection material has reached the position of the sensor 80 (predetermined position C).

Also, by using the infrared temperature sensor the response of which is not more than 10ms, it is possible to perform a feedback for changing the injection termination time within a cycle in which the injection of the injection material is in progress.

Moreover, even when using the infrared temperature sensor as a sensor 80, it is preferably provided in a position of the ejector pin for releasing a molded product from the mold apparatus.

In the above-described embodiment, a description is given of an example in which the injection material is injected into a single mold apparatus 10 from the discharge device 70. However, the invention is not limited thereto. A plurality of mold apparatuses may be injected with the injection material from the discharge device 70.

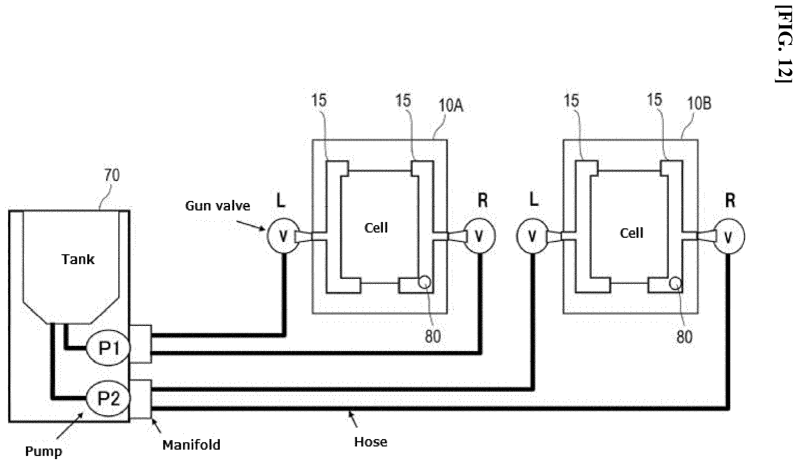

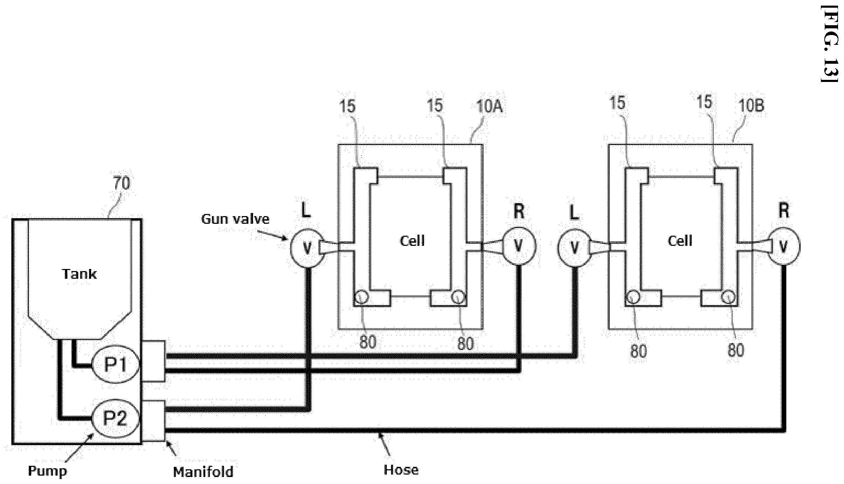

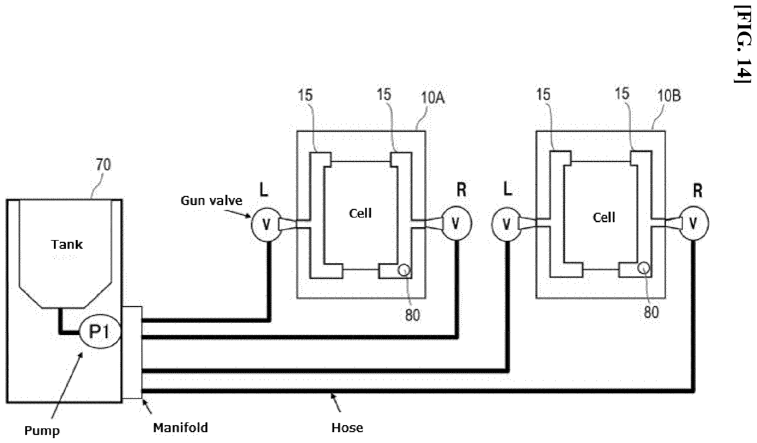

FIG. 12 a diagram showing a configuration example in which a discharge device having a plurality of discharge pumps and a plurality of mold apparatuses with only a single sensor are connected (2 pumps 1 sensor). FIG. 13 is a diagram showing a configuration example in which a discharge device having a plurality of discharge pumps and a plurality of mold apparatuses with two sensors are connected (2 pumps 2 sensors). FIG. 14 is a diagram showing a configuration example in which a discharge device having a single discharge pump and a plurality of mold apparatuses with only a single sensor are connected (1 pump 1 sensor).

In the configuration shown in FIG. 12, the injection material discharged from the first discharge pump P1 is injected to the left and right cavities 15, 15 of the first die unit 10A at the same time. At the same time, the injection material discharged from the second discharge pump P2 is injected simultaneously into the left and right cavities 15 , 15 of the second mold apparatus 10B. A sensor 80 is provided for respective mold apparatus 10A, 10B, one for each, i.e., one in the right side cavity 15 of the first mold apparatus 10A and one in the right side cavity 15 of the second mold apparatus 10B. By this configuration, a plurality of mold apparatuses 10A, 10B can be injected with the injection material at the same time. The amount of the injection material injected into the left and right cavities 15, 15 of the mold apparatuses 10A, 10B is controlled based on a sensor value of the sensor 80, 80 which is provided in the right side cavity 15 of the associated mold apparatus 10A, 10B. Thus, the control is simple.

In the configuration shown in FIG. 13, the injection material discharged from the first discharge pump P1 is injected into one side (right) cavity 15 of the first mold apparatus 10A and subsequently into one side (left) cavity 15 of the second mold apparatus 10B, i.e., separately in two steps. At the same time, the injection material discharged from the second discharge pump P2 is injected into the other side (left) cavity 15 of the first mold apparatus 10A and the other side (right) cavity 15 of the second mold apparatus 10B, separately in two steps. Further, the sensor 80 is provided in each of left and right cavities 15, 15 of the mold apparatuses 10A, 10B. For example, the sensor is provided in left and right cavities 15, 15 of the first mold apparatus 10A, and in left and right cavities 15, 15 of the second mold apparatus 10B. By this configuration, the plurality of mold apparatuses 10A, 10B is injected with the injection material in parallel. Since the amount of injection material injected into the right and left cavities 15 of each mold device 10 (A, B) is to be controlled independently based on the sensor value of the sensor 80 respectively provided in the respective cavities 15, 15, compared to the configuration in FIG. 12, control of more accurate injection amount is available.

In the configuration shown in FIG. 14, the injection material discharged from the first discharge pump P1 is introduced in the left and right cavities 15, 15 of the first mold apparatus 10A, and in the left and right cavities 15, 15 of the second mold apparatus 10B, separately in four steps. The sensor 80 is provided for the mold apparatus 10A, 10B, one for each, for example, one in the right side cavity 15 of the first mold apparatus and one in the right side cavity 15 of the second mold apparatus 10B. By this configuration, the plurality of mold apparatuses 10A, 10B is injected with the injection material in parallel. In addition, the amount of injection material injected into the right and left cavities 15, 15 of the associated mold apparatus 10A, 10B is controlled based on the sensor value of the sensor 80 provided in the right side cavity 15 of the associated mold apparatus 10A, 10B, control is simpler.

Further, in FIGS. 12 to 14, although only the example of two mold apparatuses 10A, 10B connected to the discharge device 70 is shown, three or more mold apparatuses may be connected.

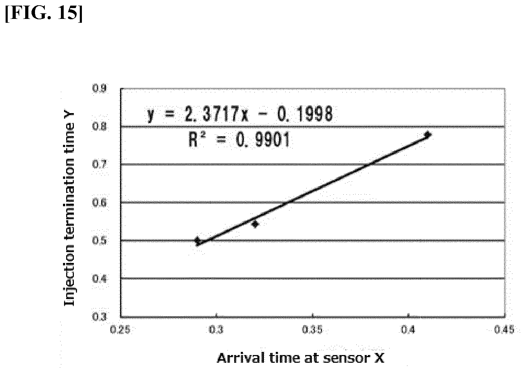

Furthermore, in the above-described embodiments, by using the relationship expression F of the second order shown in FIG. 8, the optimum injection termination time is determined. However, the invention is not limited thereto. A relationship expression F 'of a single order may be used. FIG. 15 is a graph of a linear function that indicates the relationship between the optimum injection termination time to produce a defect-free molded product and the time until the injection material injected into the mold apparatus reaches the sensor. The relationship expression F' of the first-order function as shown in FIG. 15 is obtained by injecting injection material several times at different temperatures and by respectively plotting the points determined by the time at which the injection material reaches the sensor 80 and the injection termination time at which the total injection amount of the injection material assumes 95% of the full injection amount of the cavity 15. More specifically, by injecting injection materials at temperature 210 °C, 200 °C, and 190 °C, the relationship F' was obtained, which is expressed by "Y = 2.3717X-0.1998". It should be noted that the coefficient of determination R² in this case is 0.9901. Thus, it is safe to say that a very good fit relationship F' has been obtained. Therefore, since the relational expression F 'may be determined simply by injection of several times, the increase and decrease in injection amount can be fine-adjusted easily even in a situation with installing the injection control system 1.

The configuration of the injection control system 1 described above is provided to describe the features of main elements of the embodiments and modifications described above. The specific configurations are not limited to these. Moreover, the present invention does not exclude a general configuration provided with respect to the injection control system 1.

Further, the program for operating the injection control unit 90 may be provided by a computer-readable recording medium such as USB memory, flexible disk, a CD-ROM, and the like, or may be provided on-line via a network such as the Internet. In this case, the program recorded on a computer readable medium is normally transferred and stored to the ROM or hard disk. The program, for example, may be provided as independent application software, or may be incorporated in the software of the system as a function of the injection control unit 90. The processing executed in the injection control unit 90 can also be realized by a dedicated hardware circuit such as ASIC (Application Specific Integrated Circuit). In this case, it may be implemented in a single hardware or may be implemented by a plurality of hardware.

### (Injection material)

For reference, a description of the injection material is now given.

The injection material includes a thermoplastic material. The thermoplastic material, so-called thermoplastic resin (hot melt). The thermoplastic resin is softened when heated for easy forming, and has the property of solidifying on cooling. The thermoplastic resin is classified into general-purpose plastics, engineering plastics (hereinafter abbreviated as "en-pla"), super engineering plastics, and the like.

Note that, in many cases, the heat-resistant temperature in the general-purpose plastics is included in the range of about 60 to 100 °C. Examples are polyethylene, polypropylene, polyvinyl chloride, polyvinylidene chloride, polystyrene, polyvinyl acetate, Teflon (registered trademark), polytetrafluoroethylene, acrylonitrile butadiene styrene resins, acrylic resins, and the like.

In many cases, the heat temperature of the engineering plastics is included in the range of about 100 to 150 °C. Examples are polyamides, nylons, polyacetals, polycarbonates, modified polyphenylene ether, polybutylene terephthalate, polyethylene terephthalate, glass fiber reinforced polyethylene terephthalate, cyclic polyolefin, and the like. Although not particularly limited, preferably, a thermoplastic resin of polyamide with a low viscosity when heated may be used.

In many cases, the heat-resistant temperature of the super engineering plastic is included in the range of about 150 to 350 °C. Examples are polyphenylene sulfide, polytetrafluoroethylene, polysulfone, polyether sulfone, amorphous polyarylate, liquid crystal polymers, polyetheretherketone, thermoplastic polyimide, polyamideimide, and the like.

### DESCRIPTION OF REFERENCE NUMERALS

- 1: injection control system,
- 10: mold apparatus,
- 11: lower die,
- 12: upper die,
- 13: housing portion,
- 14: injection inlet,
- 15: cavity,
- 20: injection material supply source,
- 30: pumping device,
- 40: removing device,
- 50: air supply source,
- 60: electric driving valve,
- 70: discharge device,
- 80: sensor,
- 90: injection control unit,
- 100: battery cell,
- 150: reinforcing member,
- A: injection position
- B, B': flow end
- C: predetermined position (sensor position)

## Claims

1. An injection control method for controlling an injection mechanism that injects injection material into a cavity (15) of a mold (10), comprising:
a detection step for detecting that the injection material reaches a predetermined position (C) in the cavity (15) away from an injection position (A), and
a determination step for determining an injection termination time (Y), **characterized in that**, in the determination step, the injection termination time (Y) is determined by using a relationship expression (F) representing the relationship between the time period (X) from the injection start of the injection material to the detection in the detection step and the time until a predetermined amount of the injection material is injected into the cavity (15).

2. The injection control method as claimed in claim 1, further comprising:
an injection termination step for ending the injection by the injection mechanism at the injection termination time (Y) determined in the determination step.

3. The injection control method as claimed in any one of claims 1 to 2, wherein the injection position (A) is located in the gravity center of the injection material which is assumed to be filled in the cavity (15).

4. The injection control method as claimed in any one of claims 1 to 3, wherein the predetermined position (C) is somewhere between the injection position (A) and a flow end (B, B') at which the injection material injected from the injection position (A) stops to flow.

5. The injection control method as claimed in any one of claims 1 to 4, wherein, in the detection step, at least one (80) of a temperature sensor, pressure sensor, and fiber sensor is used to detect the arrival of the injection material at the predetermined position (C).

6. The injection control method as claimed in any one of claims 1 to 4, wherein, in the detection step, an infrared temperature sensor (80) is used to detect the arrival of the injection material at the predetermined position (C).

7. An injection control system (1), comprising:
an injection device (70) configured to inject an injection material into a cavity (15) of at least one mold apparatus (10),
a detection unit (80) provided in a cavity (15) in a position (C) away from an injection position (A) of the injection material and configured to detect arrival of the injection material,
an injection control unit (90)
wherein
the injection control unit (90) is configured to determine an injection termination time (Y) based on the time from the injection start time of the injection material until the detection by the detection unit (80) and
the injection control unit (90) is configured to determine the injection termination time (Y) by using a relationship expression (F) representing the relationship between the time period (X) from the injection start of the injection material to the detection in the detection step and the time until the cavity (15) is filled with the injection material.

8. The injection control system (1) as claimed in claim 7, further comprising:
an injection termination unit configured to end the injection of the injection material at the injection termination time (Y) determined by the injection control unit (90).

9. The injection control system (1) as claimed in any one of claims 7 to 8, wherein the injection position (A) is located in the gravity center of the injection material which is assumed to be filled in the cavity (15).

10. The injection control system (1) as claimed in any one of claims 7 to 9, wherein the predetermined position (C) is somewhere between the injection position (A) and a flow end (B, B') at which the injection material injected from the injection position (A) stops to flow.

11. The injection control system (1) as claimed in any one of claims 7 to 10, wherein at least one (80) of a temperature sensor, pressure sensor, and fiber sensor is used to detect the arrival of the injection material at the predetermined position (C).

12. The injection control system (1) as claimed in any one of claims 7 to 10, wherein an infrared temperature sensor (80) is used to detect the arrival of the injection material at the predetermined position (C).

13. The injection control method as claimed in any one of claims 1 to 4, wherein, in the detection step, arrival of the injection material at the predetermined position (C) is detected by using a sensor (80), wherein the sensor (80) is disposed in the cavity (15) or in an ejector pin provided for releasing a molded product formed in the cavity (15) from the mold (10).

## Patentansprüche

1. Einspritzsteuerverfahren zum Steuern eines Einspritzmechanismus, der Einspritzmaterial in einen Hohlraum (15) einer Form (10) einspritzt, umfassend:
einen Erfassungsschritt zum Erfassen, dass das Einspritzmaterial eine vorgegebene, von einer Einspritzposition (A) entfernte Position (C) im Hohlraum (15) erreicht, und
einen Ermittlungsschritt zum Ermitteln eines Einspritzbeendigungszeitpunkts (Y),
**dadurch gekennzeichnet, dass** im Ermittlungsschritt der Einspritzbeendigungszeitpunkt (Y) unter Verwendung einer Beziehung (F) zwischen der Zeitspanne (X) vom Einspritzbeginn des Einspritzmaterials bis zur Erfassung im Erfassungsschritt und der Zeit ermittelt wird, bis eine vorgegebene Menge des Einspritzmaterials in den Hohlraum (15) eingespritzt ist.

2. Einspritzsteuerverfahren nach Anspruch 1, ferner umfassend:
einen Einspritzbeendigungsschritt zum Beenden der Einspritzung durch den Einspritzmechanismus zum im Ermittlungsschritt ermittelten Einspritzbeendigungszeitpunkt (Y).

3. Einspritzsteuerverfahren nach einem der Ansprüche 1 bis 2, wobei die Einspritzposition (A) im Schwerpunkt des angenommenen, in den Hohlraum (15) einzufüllenden Einspritzmaterials angeordnet ist.

4. Einspritzsteuerverfahren nach einem der Ansprüche 1 bis 3, wobei die vorgegebene Position (C) irgendwo zwischen der Einspritzposition (A) und einem Strömungsende (B, B ") liegt, an dem das von der Einspritzposition (A) eingespritzte Einspritzmaterial aufhört zu fließen.

5. Einspritzsteuerverfahren nach einem der Ansprüche 1 bis 4, wobei im Erfassungsschritt mindestens einer (80) eines Temperatursensors, eines Drucksensors und eines Fasersensors zum Erfassen der Ankunft des Einspritzmaterials an der vorgegebenen Position (C) verwendet wird.

6. Einspritzsteuerverfahren nach einem der Ansprüche 1 bis 4, wobei im Erfassungsschritt ein Infrarot-Temperatursensor (80) zum Erfassen der Ankunft des Einspritzmaterials an der vorgegebenen Position (C) verwendet wird.

7. Einspritzsteuersystem (1), umfassend:
eine Einspritzvorrichtung (70), die zum Einspritzen eines Einspritzmaterials in einen Hohlraum (15) zumindest einer Formvorrichtung (10) konfiguriert ist,
eine Erfassungseinheit (80), die in einem Hohlraum (15) an einer von einer Einspritzposition (A) des Einspritzmaterials entfernten Position (C) vorgesehen ist und zum Erfassen der Ankunft des Einspritzmaterials konfiguriert ist,
eine Einspritzsteuereinheit (90),
wobei
die Einspritzsteuereinheit (90) zum Ermitteln eines Einspritzbeendigungszeitpunkts (Y) basierend auf der Zeit vom Einspritzstartzeitpunkt des Einspritzmaterials bis zur Erfassung durch die Erfassungseinheit (80) konfiguriert ist, und
die Einspritzsteuereinheit (90) zum Ermitteln des Einspritzbeendigungszeitpunkts (Y) unter Verwendung einer Beziehung (F) konfiguriert ist, welche die Beziehung zwischen der Zeitspanne (X) vom Einspritzbeginn des Einspritzmaterials bis zur Erfassung im Erfassungsschritt und der Zeit repräsentiert, bis eine vorgegebene Menge des Einspritzmaterials in den Hohlraum (15) eingespritzt ist.

8. Einspritzsteuersystem (1) nach Anspruch 7, ferner umfassend:
eine Einspritzbeendigungseinheit, die zum Beenden des Einspritzens des Einspritzmaterials zum durch die Einspritzsteuereinheit (90) bestimmten Einspritzbeendigungszeitpunkt konfiguriert ist.

9. Einspritzsteuersystem (1) nach einem der Ansprüche 7 bis 8, wobei die Einspritzposition (A) im Schwerpunkt des angenommenen, in den Hohlraum (15) einzufüllenden Einspritzmaterials angeordnet ist.

10. Einspritzsteuersystem (1) nach einem der Ansprüche 7 bis 9, wobei die vorgegebene Position (C) irgendwo zwischen der Einspritzposition (A) und einem Strömungsende (B, B ") liegt, an dem das von der Einspritzposition (A) eingespritzte Einspritzmaterial aufhört zu fließen.

11. Einspritzsteuersystem (1) nach einem der Ansprüche 7 bis 10, wobei zumindest einer (80) eines Temperatursensors, Drucksensors und Fasersensors zum Erfassen der Ankunft des Einspritzmaterials an der vorgegebenen Position (C) verwendet wird.

12. Einspritzsteuersystem (1) nach einem der Ansprüche 7 bis 10, wobei ein Infrarot-Temperatursensor (80) zum Erfassen der Ankunft des Einspritzmaterials an der vorgegebenen Position (C) verwendet wird.

13. Einspritzsteuerverfahren nach einem der Ansprüche 1 bis 4, wobei im Erfassungsschritt die Ankunft des Einspritzmaterials an der vorgegebenen Position (C) unter Verwendung eines Sensors (80) erfasst wird, wobei der Sensor (80) im Hohlraum (15) oder in einem Auswerferstift angeordnet ist, der zum Freigeben eines im Hohlraum (15) ausbildeten geformten Produkts aus der Form (10) vorgesehen ist.

## Revendications

1. Procédé de commande d'injection pour commander un mécanisme d'injection qui injecte un matériau d'injection dans une cavité (15) d'un moule (10), comprenant :
une étape de détection pour détecter que le matériau d'injection atteint une position prédéterminée (C) dans la cavité (15) loin d'une position d'injection (A), et
une étape de détermination pour déterminer un moment de fin d'injection (Y), **caractérisé en ce que**,
dans l'étape de détermination, le moment de fin d'injection (Y) est déterminé en utilisant une expression de relation (F) représentant la relation entre la durée (X) à partir du début d'injection du matériau d'injection jusqu'à la détection dans l'étape de détection et le temps jusqu'à ce qu'une quantité prédéterminée du matériau d'injection soit injectée dans la cavité (15).

2. Procédé de commande d'injection tel que revendiqué dans la revendication 1, comprenant en outre :
une étape de fin d'injection pour mettre fin à l'injection par le mécanisme d'injection au moment de fin d'injection (Y) déterminé dans l'étape de détermination.

3. Procédé de commande d'injection tel que revendiqué dans l'une quelconque des revendications 1 à 2, dans lequel la position d'injection (A) est située dans le centre de gravité du matériau d'injection qui est supposé remplir la cavité (15).

4. Procédé de commande d'injection tel que revendiqué dans l'une quelconque des revendications 1 à 3, dans lequel la position prédéterminée (C) est quelque part entre la position d'injection (A) et une extrémité d'écoulement (B, B') au niveau de laquelle le matériau d'injection injecté à partir de la position d'injection (A) cesse de s'écouler.

5. Procédé de commande d'injection tel que revendiqué dans l'une quelconque des revendications 1 à 4, dans lequel, dans l'étape de détection, au moins l'un (80) d'un capteur de température, d'un capteur de pression, et d'un capteur de fibre est utilisé pour détecter l'arrivée du matériau d'injection à la position prédéterminée (C).

6. Procédé de commande d'injection tel que revendiqué dans l'une quelconque des revendications 1 à 4, dans lequel, dans l'étape de détection, un capteur de température infrarouge (80) est utilisé pour détecter l'arrivée du matériau d'injection à la position prédéterminée (C).

7. Système de commande d'injection (1), comprenant :
un dispositif d'injection (70) configuré pour injecter un matériau d'injection dans une cavité (15) d'au moins un appareil de moulage (10),
une unité de détection (80) prévue dans une cavité (15) dans une position (C) loin d'une position d'injection (A) du matériau d'injection et configurée pour détecter l'arrivée du matériau d'injection,
une unité de commande d'injection (90), où
l'unité de commande d'injection (90) est configurée pour déterminer un moment de fin d'injection (Y) sur la base du temps à partir du moment de début d'injection du matériau d'injection jusqu'à la détection par l'unité de détection (80) et
l'unité de commande d'injection (90) est configurée pour déterminer le moment de fin d'injection (Y) en utilisant une expression de relation (F) représentant la relation entre la durée (X) à partir du début d'injection du matériau d'injection jusqu'à la détection dans l'étape de détection et le temps jusqu'à ce que la cavité (15) soit remplie du matériau d'injection.

8. Système de commande d'injection (1) tel que revendiqué dans la revendication 7, comprenant en outre :
une unité de fin d'injection configurée pour mettre fin à l'injection du matériau d'injection au moment de fin d'injection (Y) déterminé par l'unité de commande d'injection (90).

9. Système de commande d'injection (1) tel que revendiqué dans l'une quelconque des revendications 7 à 8, dans lequel la position d'injection (A) est située dans le centre de gravité du matériau d'injection qui est supposé remplir la cavité (15).

10. Système de commande d'injection (1) tel que revendiqué dans l'une quelconque des revendications 7 à 9, dans lequel la position prédéterminée (C) est quelque part entre la position d'injection (A) et une extrémité d'écoulement (B, B') au niveau de laquelle le matériau d'injection injecté à partir de la position d'injection (A) cesse de s'écouler.

11. Système de commande d'injection (1) tel que revendiqué dans l'une quelconque des revendications 7 à 10, dans lequel au moins l'un (80) d'un capteur de température, d'un capteur de pression, et d'un capteur de fibre est utilisé pour détecter l'arrivée du matériau d'injection à la position prédéterminée (C).

12. Système de commande d'injection (1) tel que revendiqué dans l'une quelconque des revendications 7 à 10, dans lequel un capteur de température infrarouge (80) est utilisé pour détecter l'arrivée du matériau d'injection à la position prédéterminée (C).

13. Procédé de commande d'injection tel que revendiqué dans l'une quelconque des revendications 1 à 4, dans lequel, dans l'étape de détection, l'arrivée du matériau d'injection à la position prédéterminée (C) est détectée en utilisant un capteur (80), où le capteur (80) est disposé dans la cavité (15) ou dans une broche d'éjecteur prévue pour libérer un produit moulé formé dans la cavité (15) à partir du moule (10).
